# EUROPEAN PATENT APPLICATION

(11) **EP 4 386 961 A1**
(43) Date of publication of application: **19.06.2024**
(21) Application number: 23843266.0
(22) Date of filing: 12.07.2023
(51) Int. Cl.: H01M 50/383, H01M 50/35, H01M 50/24, H01M 50/211, H01M 50/249, H01M 50/531

(54) **BATTERY PACK AND VEHICLE COMPRISING SAME**

(30) Priority: 20.07.2022 KR 20220089761; 27.04.2023 KR 20230055791
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Seung-Joon, Daejeon 34122 (KR); KIM, In-Soo, Daejeon 34122 (KR); CHI, Ho-June, Daejeon 34122 (KR)
(74) Representative: Plasseraud IP
(86) International application number: PCT/KR2023/009975
(87) International publication number: WO 2024/019416

(57) **Abstract**

Provided are a battery pack configured to ensure structural stability even when a thermal event occurs and a vehicle including the battery pack. A battery pack according to an aspect of the present disclosure includes at least one battery cell including electrode leads drawing out along a front-back direction and stacked along a left-right direction, a pack case in which the at least one battery cell is accommodated, and a partition wall extending along the left-right direction between the pack case and the at least one battery cell, the partition wall being closed in the front-back direction and being open in the left-right direction.

## Description

### TECHNICAL FIELD

The present disclosure relates to a battery pack and a vehicle including the same, and more particularly, to a battery pack configured to ensure structural stability even when a thermal event occurs, and a vehicle including the battery pack. The present application claims priority to Korean Patent Application No. 10-2022-0089761 filed on July 20, 2022 and Korean Patent Application No. 10-2023-0055791 filed on April 27, 2023, the disclosures of which are incorporated herein by reference.

### BACKGROUND ART

As the demand for portable electronic products such as laptops, video cameras, and mobile phones has recently rapidly increased and the development of electric vehicles, energy storage batteries, robots, satellites, etc. has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. Also, a lithium secondary battery includes a positive electrode plate and a negative electrode plate to which a positive electrode active material and a negative electrode active material are respectively applied, an electrode assembly in which the positive electrode plate and the negative electrode plate are located with a separator therebetween, and a casing in which the electrode assembly is sealed and accommodated along with an electrolyte.

According to a shape of a battery case, lithium secondary batteries may be classified into can-type secondary batteries in which an electrode assembly is received in a metal can, and pouch-type secondary batteries in which an electrode assembly is received in a pouch of an aluminum laminate sheet. Can-type secondary batteries may be classified into cylindrical batteries and prismatic batteries according to a shape of a metal can. Here, pouch-type secondary batteries may be flexibly formed in various shapes. Also, pouch-type secondary batteries have advantages in many aspects such as light weight and small dead space when stacked.

In order for a lithium secondary battery to provide high voltage and high current, a plurality of battery cells are overlapped or stacked by themselves or overlapped or stacked while mounted on a cartridge to form a dense structure, and then, are used as a battery module or a battery pack in which the battery cells are electrically connected.

However, such a conventional battery pack may be disadvantageous in terms of energy density. In particular, in a process of accommodating and modularizing a plurality of battery cells in a module case, the volume of a battery pack may be unnecessarily increased or a space occupied by the battery cells may be reduced due to various components such as the module case or a stacking frame. Furthermore, in order to secure an assembly tolerance for the components such as the module case or the stacking frame as well as a space occupied by the components, a receiving space for the battery cells may be reduced. Accordingly, there may be limitations in increasing the energy density of the conventional battery pack.

Also, the conventional battery pack may be disadvantageous in terms of assemblability. In particular, in order to manufacture a battery pack, because a plurality of battery cells are first modularized to form a battery module and then the battery module is accommodated in a pack case, a process of manufacturing a battery pack becomes complicated. Moreover, a process and structure of forming a cell stack by using a stacking frame, a bolt, a plate, etc. may be very complicated.

Also, the conventional battery pack has a problem in that because a module case is accommodated in a pack case and battery cells are accommodated in the module case, it is difficult to ensure excellent cooling performance. In particular, when heat of the battery cells accommodated in the module case is discharged to the outside of the pack case through the module case, cooling efficiency may be reduced and a cooling structure may be complicated.

Also, safety is one of the most important issues in a battery pack. In particular, when a thermal event occurs in any one of a plurality of battery cells included in a battery pack, it is necessary to suppress propagation of the thermal event to other battery cells.

When the propagation of the thermal event between battery cells is not appropriately suppressed, this may cause a thermal event of other battery cells included in the battery pack, thereby causing a bigger problem such as ignition or explosion of the battery pack. Furthermore, the ignition or explosion of the battery pack may cause great damage to surrounding people or property. Accordingly, in such a battery pack, a configuration capable of appropriately controlling a thermal event is required.

In addition, when a pack case is formed of a material such as aluminum or plastic in order to make a battery pack lighter, there is a risk that the pack case is melted due to venting gas or flame discharged from a battery cell, causing a structure to collapse. To ensure the safety of a battery pack, a means for preventing a structure of the battery pack from collapsing even when a thermal event occurs is required.

### DISCLOSURE

### Technical Problem

The present disclosure is designed to solve the problems of the related art, and therefore the present disclosure is directed to providing a battery pack configured to ensure structural stability even when a thermal event occurs, and a vehicle including the battery pack.

The present disclosure is also directed to providing a battery pack in which energy density is improved, assemblability is excellent, cooling performance is ensured, and thermal propagation is prevented, and a vehicle including the battery pack.

However, technical objectives to be achieved by the present disclosure are not limited thereto, and other unmentioned technical objectives will be apparent to one of ordinary skill in the art from the description of the present disclosure.

### Technical Solution

In one aspect of the present disclosure, there is provided a battery pack including at least one battery cell including electrode leads drawing out along a front-back direction and stacked along a left-right direction, a pack case in which the at least one battery cell is accommodated, and a partition wall extending along the left-right direction between the pack case and the at least one battery cell, the partition wall being closed in the front-back direction and being open in the left-right direction.

In a preferred example, the partition wall may include a plate portion having a quadrangular cross-sectional shape, a plurality of rectangular openings passing through both surfaces of the plate portion and spaced apart from each other by a certain interval to be parallel to each other, and a louver portion extending from one side surface of each of the plurality of rectangular openings to have an inclined surface.

The one side surface of the opening may be a surface along a vertical direction.

The inclined surface may include a portion facing a direction between the front-back direction and the left-right direction, the inclined surface protruding beyond the plate portion.

The louver portion may further include an extension surface extending from the inclined surface along the left-right direction.

The partition wall may include a plurality of strips having a certain width, bent in a periodic wave shape, alternately arranged parallel to each other, and coupled to each other to form a flat surface.

The partition wall may include a material having a higher melting point than the pack case.

The battery pack may further include a cell cover configured to surround at least a part of the at least one battery cell and including an open portion in the front-back direction, wherein the partition wall is located between the pack case and the open portion.

The partition wall may include a plurality of blocking portions each corresponding to the open portion of the cell cover and a through-hole formed between the plurality of blocking portions and allowing venting gas or flame discharged from the at least one battery cell to pass therethrough.

In this case, the through-hole may be a gap between adjacent blocking portions in the front-back direction.

A plurality of through-holes may be formed at certain intervals in the left-right direction.

Also, the plurality of blocking portions may be alternately arranged in the left-right direction to be spaced apart from each other in the front-back direction, a connecting portion may be formed between the plurality of blocking portions along the front-back direction, and the through-hole may be a slit formed in the connecting portion.

Preferably, the cell cover may include a first cover portion covering one side surface of the at least one battery cell, a second cover portion covering the other side surface of the at least one battery cell, and a third cover portion connecting the first cover portion to the second cover portion and covering an upper end portion of the at least one battery cell.

The cell cover may be formed by bending one plate.

The cell cover may include an insulating coating layer on an inner surface thereof.

The pack case may include a venting path facing the open portion, and the partition wall may be located between the venting path and the open portion.

In this case, the pack case may include a side frame constituting a side surface of the pack case, and the venting path may be provided in the side frame.

The side frame may include an inlet that communicates with the venting path and allows venting gas or flame discharged from the at least one battery cell to be introduced into the venting path.

Also, a gas valve may be provided on an outer surface of the side frame, and the venting path may include one end communicating with the inlet, may extend along an inside of the side frame, and may include the other end connected to the gas valve.

In another aspect of the present disclosure, there is provided a vehicle including the battery pack.

### Advantageous Effects

According to the present disclosure, there are provided a battery pack to which a partition wall is applied to prevent high-temperature sparks generated when a thermal event of a battery cell occurs from directly hitting a pack case of the battery pack, and a vehicle including the battery pack.

According to an aspect of the present disclosure, when thermal runaway of a battery cell occurs, the flow of high-temperature and high-pressure venting gas or flame may be primarily weakened through a partition wall. Accordingly, the continuous and strong hitting of the high-temperature and high-pressure venting gas or flame on an inner wall of a venting path of a pack case may be minimized. In addition, even when thermal runaway of a battery cell occurs, the collapse of the pack case may be prevented, thereby ensuring the structural stability of the battery pack. Also, the propagation of venting gas or flame between adjacent battery cells may be minimized.

According to another aspect of the present disclosure, as a cell-to-pack (CTP) concept, a plurality of battery cells may be directly mounted on a pack case while being only partially covered by a cell cover having a simplified structure, rather than being accommodated in a separate module case and mounted on the pack case of a battery pack. Accordingly, the overall weight and volume of the battery pack may be reduced and the energy density of the battery pack may be increased, safe handling and mounting of battery cells during manufacture of the battery pack may be facilitated, manufacturing costs may be reduced, and cooling performance may be improved. Also, thermal propagation may be prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a partially exploded perspective view illustrating a battery pack according to an embodiment of the present disclosure.
FIG. 2 is a perspective view illustrating a pouch-type battery cell that may be included in the battery pack of FIG. 1.
FIG. 3 is a top view illustrating the battery pack of FIG. 1, for describing an effect by a partition wall.
FIG. 4 is a perspective view illustrating a partition wall according to an example which may be included in the battery pack of FIG. 1.
FIG. 5 is a cross-sectional perspective view illustrating the partition wall of FIG. 4.
FIG. 6 is a perspective view illustrating another example of a partition wall.
FIG. 7 is a cross-sectional perspective view illustrating the partition wall of FIG. 6.
FIG. 8 is a perspective view illustrating still another example of a partition wall.
FIG. 9 is a partially exploded perspective view illustrating a battery pack according to another embodiment of the present disclosure.
FIG. 10 is a perspective view illustrating a cell unit included in the battery pack of FIG. 9.
FIG. 11 is an exploded perspective view illustrating the cell unit of FIG. 10.
FIG. 12 is a schematic view for describing a partition wall according to an embodiment which may be included in the battery pack of FIG. 9.
FIG. 13 is a perspective view illustrating still another example of a partition wall.
FIG. 14 is a partially exploded perspective view illustrating a battery pack according to still another embodiment of the present disclosure.
FIG. 15 is a schematic view illustrating a vehicle according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

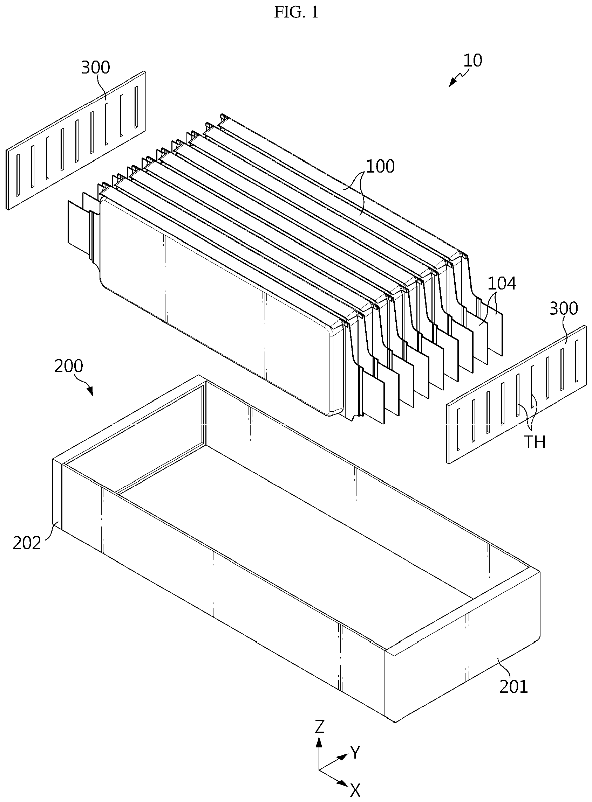

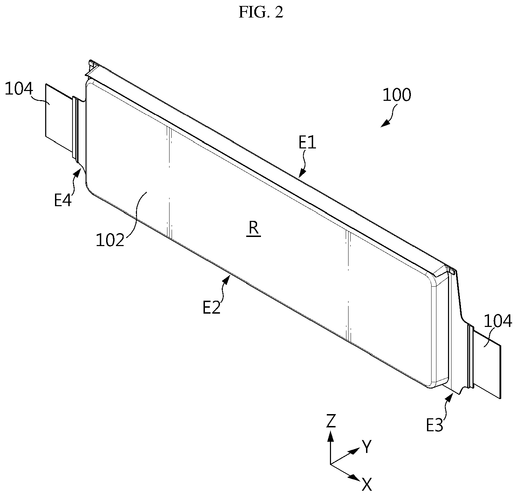

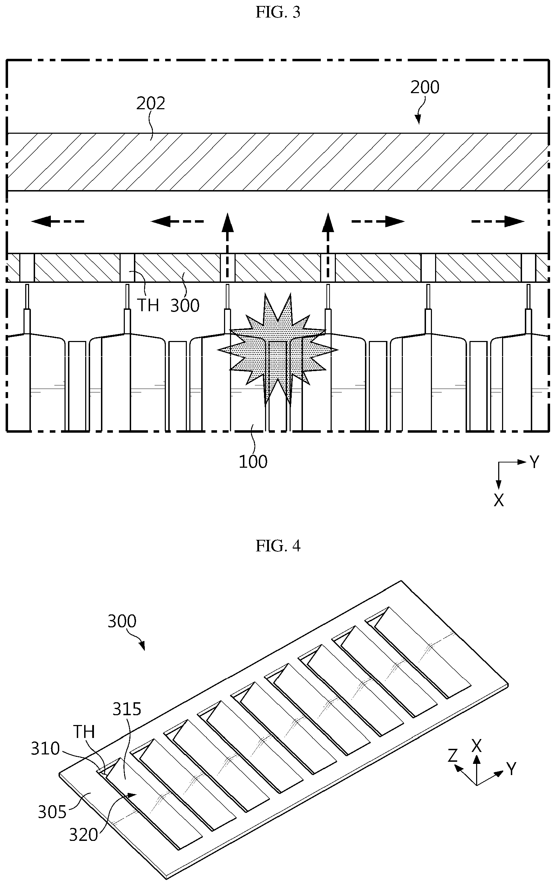

FIG. 1 is a partially exploded perspective view illustrating a battery pack according to an embodiment of the present disclosure. FIG. 2 is a perspective view illustrating a pouch-type battery cell that may be included in the battery pack of FIG. 1. FIG. 3 is a top view illustrating the battery pack of FIG. 1, for describing an effect by a partition wall.

Referring to FIGS. 1 to 3, a battery pack 10 according to an embodiment of the present disclosure includes at least one battery cell 100, a pack case 200, and a partition wall 300.

The battery cell 100 corresponds to a basic unit for charging/discharging, and may be a pouch-type battery cell manufactured by accommodating an electrode assembly and an electrolyte in a pouch casing 102 formed of a laminate film including a soft metal and sealing the pouch casing 102. In this case, the electrode assembly may be manufactured by locating a separator between a positive electrode and a negative electrode. The pouch casing 102 may be aluminum laminate sheet.

Also, the battery cell 100 may include an electrode lead 104 on at least one side. In more detail, the electrode lead 104 electrically connected to the electrode assembly may be provided outside the pouch casing 102 to be exposed. In the battery cell 100 of the present embodiment, the electrode lead 104 includes a positive electrode lead and a negative electrode lead as a pair. For example, the battery cell 100 may include the electrode leads 104 in a front-back direction (X-axis direction) as shown in FIG. 1. A longitudinal direction of the battery cell 100 may be defined as a direction between both where the electrode leads 104 protrude in the pouch casing 102. As such, the positive electrode lead and the negative electrode lead may be provided at both ends, that is, a front end and a rear end, of the battery cell 100 in the longitudinal direction of the battery cell 100.

The battery cell 100 may include a receiving portion R in which the electrode assembly is accommodated and edge portions (e.g., E1 to E4) around the receiving portion R. For example, the battery cell 100 may include four edge portions such as an upper edge portion E1, a lower edge portion E2, a front edge portion E3, and a rear edge portion E4, and all of the four edge portions (e.g., E1 to E4) may be sealed portions by using a four-side sealing method, or only the lower edge portion E2 may be a portion where the pouch casing is folded and may be an unsealed portion by using a three-side sealing method. For example, the upper edge portion E1 may be a double-side folded (DSF) portion as a sealed portion of the battery cell 100, and the lower edge portion E2 may be an unsealed portion. When a battery module or a battery pack is configured by using a pouch-type battery cell, a space occupied by the pouch-type battery cell in a device may be reduced by minimizing the size of the battery module to increase space utilization, or an area occupied by a sealed portion with respect to a certain battery module size may be minimized and the size of an electrode assembly may be increased by using a resulting surplus portion to increase the capacity of a secondary battery. For the latter, in most cases, dimensions are controlled by folding a sealed portion located on a side surface of a pouch-type battery cell to form a folded portion. FIG. 2 illustrates a state where a folded portion is formed.

A plurality of battery cells 100 may be included in the battery pack 10. The plurality of battery cells 100 may be stacked in at least one direction. Each battery cell 100 may include two wide surfaces corresponding to the receiving portion R, and a sealed portion or a folded portion of the pouch casing may exist on an edge portion of the wide surface as described above. In the present embodiment, the battery cells 100 may be stacked in a left-right direction (Y-axis direction) while being erected in a vertical direction (Z-axis direction) with a narrow surface such as the edge portion E1 or E2 facing down. The electrode leads 104 of the battery cells 100 may be electrically connected, and the plurality of battery cells 100 may be electrically connected in series and/or in parallel. Also, the plurality of battery cells 100 may be accommodated in an appropriate module case and may be included in the battery pack 10. Instead, the plurality of battery cells 100 may be included in the battery pack 10 in a state where a stacked state is maintained through an appropriate stacking frame. In FIG. 1, an electrical connection relationship of the electrode leads 104, a component for the electrical connection relationship, and members such as a module case or a stacking frame for maintaining the battery cells 100 are not shown.

The pack case 200 is provided to hold the remaining elements of the battery pack 10, and is schematically shown in FIG. 1. The battery cell 100 is accommodated in the pack case 200. The pack case 200 may be formed of a plastic or metal material. In addition, the pack case 200 may include any of various casing materials for a battery pack known at the time of filing the present application.

The partition wall 300 is also schematically shown in FIGS. 1 and 3. The partition wall 300 is located between the pack case 200 and the battery cell 100, and extends along the left-right direction that is a stacking direction of the battery cells 100. The partition wall 300 is closed in the front-back direction and is open in the left-right direction. The partition wall 300 may be provided as a press-worked fin. The partition wall 300 is conceptually shown in FIGS. 1 and 3, and reference numeral 'TH' denotes a hole through which venting gas and flame may escape in the left-right direction. The number of holes TH may be appropriately determined.

A pouch-type battery cell is light, has a low possibility of electrolyte leakage, and has flexibility in shape, and thus allows a secondary battery having the same capacity to be implemented with a smaller volume and mass. However, a pouch-type battery cell has a risk of explosion when overheating occurs, and thus ensuring safety is one of the important tasks. Overheating of a pouch-type battery cell occurs for several reasons, one of which is when overcharge exceeding a limit flows through the pouch-type battery cell. When overcurrent flows, the pouch-type battery cell generates heat due to Joule heat, causing an internal temperature of the battery cell to rise rapidly. The rapid rise in temperature may cause a decomposition reaction of an electrolyte and generate gas. This may cause a swelling phenomenon due to increased pressure in a pouch casing, and a serious problem such as secondary battery explosion may be caused. When gas is generated in the pouch-type battery cell due not only to such overcurrent but also to exposure to high temperature or external impact, it is necessary to ensure the safety of the secondary battery by effectively discharging the gas. A process of discharging gas generated in the secondary battery to the outside is referred to as venting.

From the perspective of venting gas or flame discharged from the battery cell 100 toward the pack case 200 in the front-back direction, the partition wall 300 has a structure in which the venting gas or flame is blocked in a direction toward a front surface but may escape to a side surface. The partition wall 300 may include a material having a high melting point to withstand venting gas or flame discharged from the battery cell 100. For example, the partition wall 300 may include a material such as steel having a high melting point.

It is preferable that he partition wall 300 includes a material having a higher melting point than the pack case 200. For example, the pack case 200 uses a light material such as a plastic or aluminum-based material, and the partition wall 300 uses a steel material. Preferably, the pack case 200 may be formed of aluminum or an aluminum alloy which has excellent thermal conductivity and is light. It is preferable to use 10XX series from among aluminum alloy series. 10XX series aluminum alloys refer to pure aluminum for industrial use (99% aluminum (Al) content). As the purity of aluminum is high, its processability and thermal conductivity are particularly excellent.

Venting gas or flame discharged from the battery cell 100 when a thermal event occurs may spread in all directions. However, in this case, the venting gas or flame may be guided in the longitudinal direction of the battery cell 100 by providing an appropriate venting guide structure. For example, the venting gas or flame may be guided to both outer walls 201, 202 located on both sides of the pack case 200 in the front-back direction. However, assuming that the pack case 200 is formed of aluminum, when flame particles (so-called sparks) included in the venting gas directly splash on the pack case 200, structural collapse may occur. Because a melting point of aluminum is lower than a temperature of the sparks, when the pack case 200 is directly exposed to the sparks for a long time, structural collapse may occur. When the temperature and pressure of the sparks generated during thermal runaway are continuously applied to the pack case 200, the pack case 200 which has a low melting point of several hundred degrees such as aluminum, may collapse.

According to the present disclosure, while venting gas or flame that may include sparks when a thermal event occurs is guided to the both outer walls 201, 202 of the pack case 200, the venting gas or flame may primarily hit the partition wall 300. Then, as the venting gas or flame passes through the partition wall 300 through the hole TH of the partition wall 300, the flow of the venting gas or flame may be weakened. The venting gas or flame may be introduced into the pack case 200 in this weakened state (as marked by a dashed arrow of FIG. 3). Accordingly, the pack case 200 may be prevented from being directly exposed to the sparks for a long time.

That is, the venting gas or flame may not directly hit the pack case 200 in a direction toward the pack case 200, that is, in the front-back direction in the present embodiment, but may first hit the partition wall 300, may flow along the left-right direction (side surface) that is a stacking direction of the battery cells 100 through the hole TH of the partition wall 300, and then may flow to the pack case 200. When thermal runaway occurs, the partition wall 300 guides sparks to exit through the hole TH open to the side surface without causing structural collapse even when hit by the sparks. When thermal runaway occurs, sparks directly hit the partition wall 300, not an inner wall of the pack case 200. Because the sparks hitting once the partition wall 300 should move to the side surface through the hole TH of the partition wall 300, a speed and pressure are reduced. Because the sparks do not directly hit the pack case 200, structural collapse of the battery pack 10 may be minimized.

According to this embodiment, when thermal runaway of the battery cell 100 occurs, the flow of high-temperature and high-pressure venting gas or flame may be primarily weakened through the partition wall 300. Accordingly, the continuous and strong hitting of the high-temperature and high-pressure venting gas or flame on the inner wall of the pack case 200 may be minimized. In addition, even when thermal runaway of the battery cell 100 occurs, the structural stability of the battery pack 10 may be ensured. Also, according to this embodiment, propagation of venting gas or flame between adjacent battery cells 100 may be minimized.

Even when the partition wall 300 is directly hit by sparks, the structure of the partition wall 300 does not collapse due to its high melting point. Because the pressure of the sparks hitting the portion is lowered, even when the sparks move to the pack case 200 and hit the pack case 200 two to three times, the collapse of the pack case 200 is significantly reduced compared to a case where the partition wall 300 is not provided.

In the battery cell 100 of the present embodiment, because the electrode leads 104 are located on both sides of the battery cell 100 in the longitudinal direction and venting gas or flame is guided in the longitudinal direction of the battery cell 100, the partition wall 300 may also be provided on both sides of the battery cell 100 in the longitudinal direction. Accordingly, the battery pack 10 may include a plurality of partition walls 300. The partition wall 300 may be a structure integrally formed with the pack case 200, or a separate structure inserted, compressed, adhered, or welded to the pack case 200. Because the partition wall 300 simply needs to be added, the existing pack case may be used without modification. The partition wall 300 may be provided in a thin fin shape. Accordingly, the partition wall 300 may not occupy a large volume and weight in an inner space of the battery pack 10. The partition wall 300 is spaced apart from the electrode lead 104 without physically and electrically contacting the electrode lead 104.

The partition wall 300 included in the battery pack 10 of the present disclosure may have any of various structures in which venting gas or flame is blocked in a direction toward the front surface and may flow to the side surface.

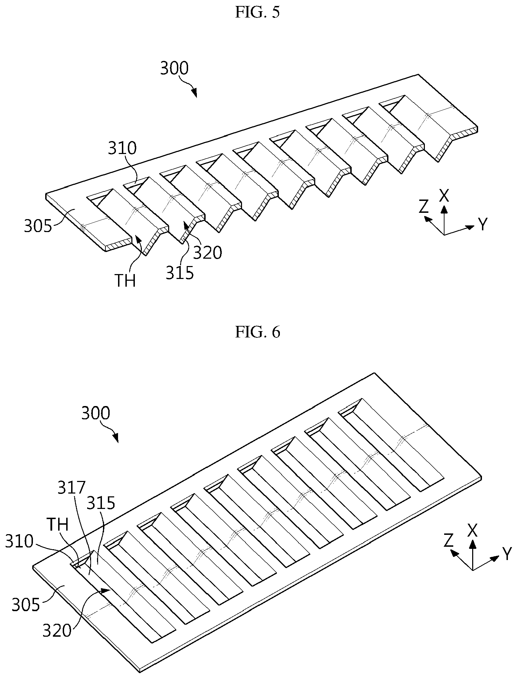

FIG. 4 is a perspective view illustrating a partition wall according to an example which may be included in the battery pack of FIG. 1. FIG. 5 is a cross-sectional perspective view illustrating the partition wall of FIG. 4.

Referring to FIGS. 4 and 5, the partition wall 300 is designed to weaken the flow of venting gas or flame discharged from the battery cell 100 toward the pack case 200, and may include a plate portion 305 having a quadrangular cross-sectional shape, a plurality of rectangular openings 310 passing through both surfaces of the plate portion 305 and spaced apart from each other by a certain interval to be parallel to each other, and a louver portion 320 extending from one side surface of the opening 310 to have an inclined surface 315.

The plate portion 305 is thin and has a large area. The plate portion 305 may be inserted into or welded to be fixed to the pack case 200, and when the plate portion 305 is fixed, one of both surfaces of the plate portion 305 faces forward and the other surface faces backward. The plate portion 305 may have an area corresponding to all battery cells 100 accommodated in the battery pack 10.

The opening 310 may be formed in the plate portion 305, and may have a shape that is open in the front-back direction. The louver portion 320 extends from one side surface of the opening 310 to cover the front-back direction and form the hole TH in the left-right direction. The one side surface of the opening 310 is a surface along the vertical direction. The louver portion 320 may obliquely protrude from the plate portion 305, and the hole TH may be surrounded by the louver portion 320.

The inclined surface 315 includes a portion facing a direction between the front-back direction and the left-right direction, and the inclined surface 315 protrudes beyond the plate portion 305. In the illustrated example, the inclined surface 315 protrudes from the plate portion 305 toward the pack case 200. The inclined surface 315 may protrude from the plate portion 305 toward the battery cell 100.

The inclined surface 315 may cover the front-back direction of the opening 310 in order to weaken the linearity of the flow of venting gas or flame discharged from the battery cell 100 toward the pack case 200. The flow of venting gas or flame hitting the plate portion 305 may be guided to the hole TH facing the left-right direction due to the louver portion 320.

In general, when a flame is strongly ejected, the flame has a linearity. Accordingly, a direction of the flame is guided to be unnaturally changed when the flame passes through the partition wall 300 by using an angle of the inclined surface 315 of the louver portion 320. When the flame escapes through the hole TH of the louver portion 320 facing the left-right direction, the flame is again guided or refracted toward the battery cell 100 in the front-back direction, passes through the partition wall 300, and travels back toward the battery cell 100, making it difficult to enter the inside of the battery pack 10.

The venting gas or flame may be blocked by hitting the plate portion 305 or the inclined surface 315, and may pass through the partition wall 300 through the hole TH surrounded by the louver portion 320 and be guided toward the pack case 200. Through the partition wall 300 having this configuration, the pack case 200 may be effectively prevented from being directly hit by sparks.

As shown in FIGS. 4 and 5, although a plurality of louver portions 320 formed on one plate portion 305 in an example of the partition wall 300 include the inclined surfaces 315 having the same angle, the plurality of louver portions 320 may be configured to include the inclined surfaces 315 having different angles. Also, although all of the plurality of louver portions 320 formed on the plate portion 305 face the same direction, directions of the plurality of louver portions 320 may be different from each other so that the louver portions 320 on both sides are symmetrical to each other with respect to the center of the plate portion 305.

Also, the plate portion 305 and the louver portion 320 are conceptually distinct elements, and the plate portion 305 and the louver portion 320 may be integrally formed with each other.

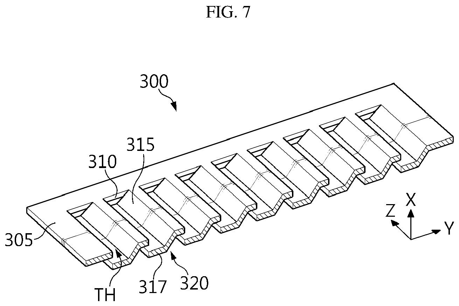

FIG. 6 is a perspective view illustrating another example of a partition wall. FIG. 7 is a cross-sectional perspective view illustrating the partition wall of FIG. 6.

Referring to FIGS. 6 and 7, the partition wall 300 is different from the partition wall 300 of FIG. 4 in that the partition wall 300 further includes an extension surface 317 extending from the inclined surface 315 along the left-right direction. The extension surface 317 extending from the inclined surface 315 may further impede the flow of venting gas or flame toward the pack case 200.

The partition wall 300 described with reference to FIGS. 4 to 7 is located in front of a direction in which venting gas or flame travels and follows a louver type to weaken the linearity of the venting gas or flame. The partition wall 300 distorts and impedes a direction of a flame when the flame in the battery pack 10 passes through the partition wall 300 and is guided toward the pack case 200, thereby effectively preventing the flame from directly hitting the pack case 200 and collapsing the pack case 200.

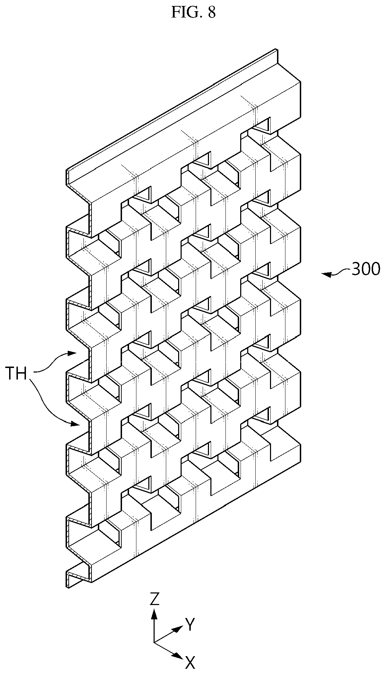

FIG. 8 is a perspective view illustrating still another example of a partition wall.

The partition wall 300 of FIG. 8 includes a plurality of strips having a certain width, bent in a periodic wave shape along the vertical direction, alternately arranged parallel to each other along the left-right direction, and coupled to each other to form a flat surface. The front-back direction is blocked by the strips, but the left-right direction is open due to the holes TH formed between the alternating strips.

When the partition wall 300 is manufactured, the partition wall 300 may be formed by connecting the strips, or may be manufactured into a shape as shown in FIG. 8 through processing such as press working on a flat material.

According to the partition wall 300, the linearity of venting gas or flame may be reduced, and thus, damage or collapse of the pack case 200 due to direct hitting may be prevented. Sparks in the venting gas may hit the partition wall 300 and may be guided and dispersed toward the holes TH. Also, the partition wall 300 may absorb the flame length. The partition wall 300 may lower a temperature of the flame and a temperature of the gas. In addition, as the venting gas or flame passes through the partition wall 300, gas pressure may be reduced due to differential pressure. Accordingly, the venting gas or flame may be discharged to the outside of the battery pack 10 more safely and with less damage.

The partition wall 300 may be implemented as a fin different from that in FIG. 8 as long as the partition wall 300 is a fin known as a lanced-and-offset fin structure. Furthermore, it should be understood that in some applications, other known fins may be used. For example, a corrugated or curved fin may be used, and the partition wall 300 may be provided by forming through-holes at appropriate positions.

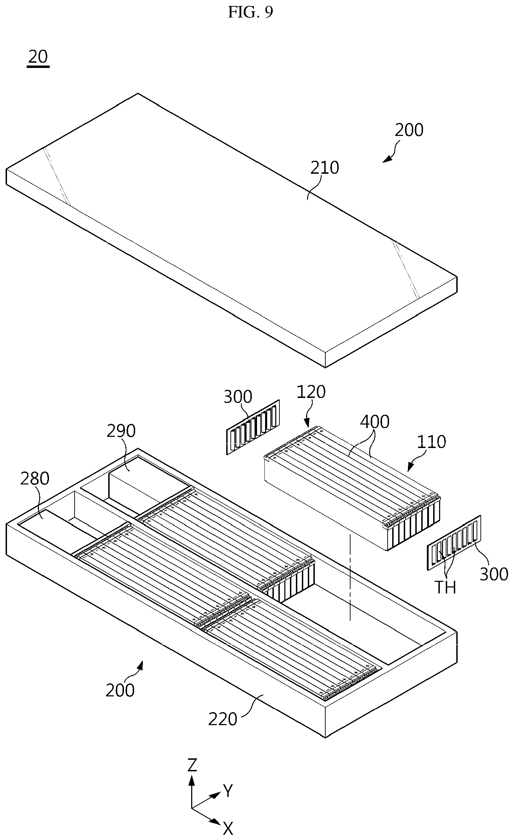

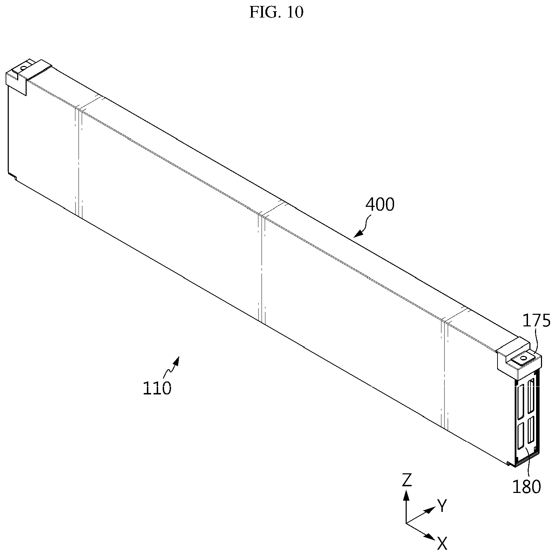

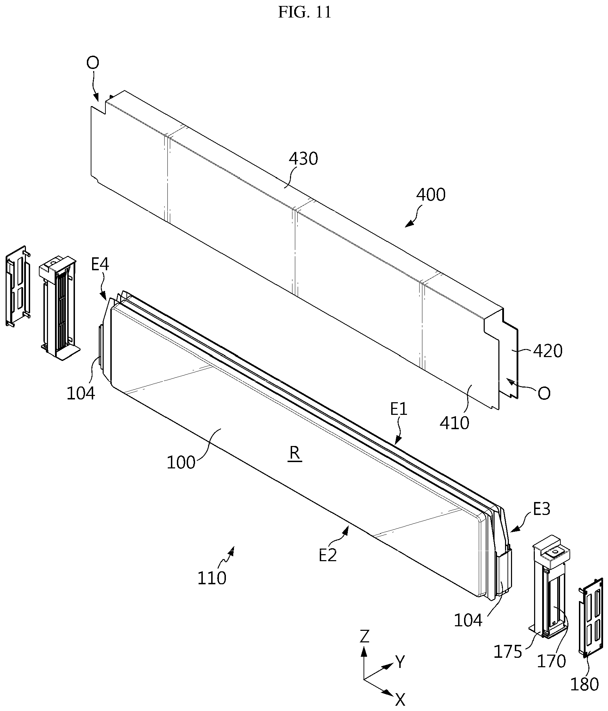

FIG. 9 is a partially exploded perspective view illustrating a battery pack according to another embodiment of the present disclosure. FIG. 10 is a perspective view illustrating a cell unit included in the battery pack of FIG. 9. FIG. 11 is an exploded perspective view illustrating the cell unit of FIG. 10.

Referring to FIGS. 9 to 11, a battery pack 20 further includes a cell cover 400 compared to the battery pack 10 described with reference to FIG. 1. The cell cover 400 is configured to surround at least a part of the battery cell 100, and open portions O are formed in the front-back direction.

The cell cover 400 surrounds and supports at least one battery cell 100 to form a cell unit 110. A plurality of cell units 110 may be provided to form a cell unit block 120. The battery pack 20 may include a plurality of cell unit blocks 120. The plurality of cell unit blocks 120 may be arranged in the pack case 200 along the front-back direction and/or the left-right direction. The scale of the cell unit block 120 may be increased by increasing the number of cell units 110 that are stacked. In the illustrated example, a total of four cell unit blocks 120, two in the front-back direction and two in the left-right direction, are provided. The pack case 200 may include an upper case 210 and a lower case 220, as shown in FIG. 9.

Also, the battery pack 20 according to the present disclosure may further include a control module 280 accommodated in an inner space of the pack case 200, as shown in FIG. 9. The control module 280 may include a BMS. The control module 280 may be mounted in an inner space of the pack case 200 and may control an overall operation such as a charging/discharging operation or a data transmitting/receiving operation of the battery cell 100. The control module 280 may be provided in a pack unit, rather than a module unit. In more detail, the control module 280 may be provided to control a charging/discharging state, a power state, and a performance state of the battery cell 100 through a pack voltage and pack current. The control module 280 estimates a state of the battery cell 100 in the battery pack 20 and manages the battery pack 20 by using the estimated state information. For example, the control module 280 estimates and manages state information of the battery pack 20 such as a state of charge (SOC), a state of health (SOH), a maximum input/output power allowance amount, and an output voltage. The control module 280 may control charging and discharging of the battery pack 20 by using the state information, and further, may estimate a time to replace the battery pack 20.

The battery pack 20 according to the present disclosure may further include a battery blocking unit 290, as shown in FIG. 9. The battery blocking unit 290 may be configured to control electrical connection of the battery cells 100 to manage the power capacity and function of the battery pack 20. To this end, the battery blocking unit 290 may include a power relay, a current sensor, and a fuse. The battery blocking unit 290 may also be provided in a pack unit rather than a module unit, and any of various blocking units known at the time of filing the present application may be employed.

In addition, the battery pack 20 according to the present disclosure may further include various elements of battery packs known at the time of filing the present application. For example, the battery pack 20 according to an embodiment of the present disclosure may further include a manual service disconnector (MSD) that allows an operator to cut off power by manually disconnecting a service plug. Also, the battery pack 20 may further include a flexible bus bar or cables for connecting at least one cell unit block.

The cell unit 110 may further include a bus bar 170, a bus bar frame 175, and an insulating cover 180. The bus bar frame 175 may be configured to support the electrode lead 104 of at least one battery cell 100 covered by the cell cover 400 and support the bus bar 170 that electrically connects the electrode lead 104 to the electrode lead 104 of another battery cell 100. In this case, the bus bar frame 175 may include a terminal electrically connected to the bus bar 170.

The insulating cover 180 may be configured to prevent a short circuit of the electrode lead 104 or the bus bar 170. To this end, the insulating cover 180 may be formed of a polymer synthetic resin having insulation.

The cell cover 400 may include a metal material (e.g., steel) that is a material having a high melting point. Also, the open portions O may be formed on both sides of the cell cover 400. In detail, the cell cover 400 may include the open portions O at portions corresponding to the electrode leads 104.

The cell cover 400 may be configured to partially surround and support an outer surface of at least one battery cell 100. In this case, the cell cover 400 may support at least one battery cell 100 in an erected state. Considering a shape of the battery cell 100, it is difficult to vertically stack the battery cell 100 in an erected state with a narrow surface such as the upper or lower edge portion E1 or E2 facing down. However, in the battery pack 20 according to the present disclosure, the cell cover 400 may be configured to surround one or more battery cells 100 and support the surrounded battery cells 100 in an upright state, that is, an erected state. Accordingly, the battery pack 20 may be configured without a separate module case or a stacking frame.

For example, the cell cover 400 may be configured to partially surround outer surfaces of three battery cells 100 and support the battery cells 100 in an erected state as shown in FIG. 11. To this end, the cell cover 400 may include a first cover portion 410 covering one side surface of the battery cell 100, a second cover portion 420 covering the other surface of the battery cell 100, and a third cover portion 430 connecting the first cover portion to the second cover portion 420 and covering an upper end of the battery cell 100.

For example, the first cover portion 410 may cover an outer surface of the receiving portion R of the battery cell 100 that is a leftmost battery cell from among the battery cells 100 surrounded by the cell cover 400. The second cover portion 420 may cover an outer surface of the receiving portion R of the battery cell 100 that is a rightmost battery cell from among the battery cells 100 surrounded by the cell cover 400.

For example, the cell cover 400 may be provided in a ' 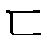 ' shape, a 'u' shape, or an 'n' shape surrounding three surfaces of the battery cell 100. The cell cover 400 may be configured so that a plurality of battery cells 100 that are upright in the vertical direction are stacked in the left-right direction. A structure in which the plurality of battery cells 100 are stacked side by side in the left-right direction in an upright state may be stably maintained by the cell cover 400.

According to the battery pack 20 including the cell cover 400, the plurality of battery cells 100 may be stably accommodated in the pack case 200 without a separate module case or a stacking frame such as a plastic cartridge. Also, there is no need to additionally provide a fastening member such as a bolt for maintaining a stacked state of the battery cells 100. Accordingly, a space occupied by another element such as a module case or a stacking frame or a space for securing a tolerance may be removed. Hence, because the battery cells 100 may occupy a more space by the removed space, the energy density of the battery pack 20 may be further improved. Also, according to this aspect of the present disclosure, because a module case, a stacking frame, or a bolt are not provided, the volume or weight of the battery pack 20 may be reduced and a manufacturing process may be simplified.

Because the battery cells 100 are easily made firm by surrounding the battery cells 100 with the cell cover 400, a configuration of directly stacking the battery cells 100 in the pack case 200 may be more easily implemented. Accordingly, the assemblability and mechanical stability of the battery pack 20 may be improved. A process of accommodating pouch-type battery cells in a module case to form a battery module and a process of accommodating one or more battery modules in a pack case may not be performed. Accordingly, a manufacturing process may be simplified and a manufacturing time may be reduced.

Also, according to this aspect of the present disclosure, handling of the battery cell 100 may become easier. For example, when a plurality of battery cells 100 are accommodated in the pack case 200, the battery cells 100 may be held by a jig or the like. In this case, the jig may hold the cell cover 400 surrounding the battery cells 100, without directly holding the battery cells 100. Accordingly, damage or breakage of the battery cell 100 caused by the jig may be prevented.

Also, according to the embodiment, one cell cover 400 may face surfaces of two receiving portions R for the battery cells 100 accommodated in the cell cover 400. Accordingly, cooling performance between the receiving portion R and the cell cover 400 may be further improved. In particular, in this case, surface cooling may be implemented through a wide surface of the receiving portion R, thereby improving cooling efficiency.

Also, because the cell cover 400 surrounds three surfaces of at least one battery cell 100, for each cell unit 110, a configuration of locating the bus bar 170 or a terminal of each cell unit 110 (e.g., the electrode lead 104) on a side surface not covered by each cell cover 400 may be easily implemented.

According to this embodiment, a discharge direction of high-temperature gas or flame may be guided to an exposed surface of the cell cover 400, that is, the open portion O. In particular, when the cell cover 400 is configured with the front and back open as described above, side directional venting along the longitudinal direction of the battery cell 100 may be easily implemented.

When the battery cell 100 is a three-side sealed battery cell, the upper edge portion E1 that is a sealed portion may be more vulnerable to the discharge of high-temperature gas or flame than the lower edge portion E2 that is an unsealed portion. However, according to the embodiment, the upper edge portion E 1 that is a sealed portion may be located upward to face the cell cover 400, which may be more advantageous for directional venting.

According to the above embodiment, gas or the like discharged from each battery cell 100 may be smoothly discharged to the outside. Furthermore, according to the present embodiment, a discharge direction of gas or flame discharged from the battery cell 100 may be controlled. Accordingly, thermal runaway between adjacent battery cells 100 may be effectively prevented.

In the illustrated example, the first cover portion 410 may extend from one end of the third cover portion 430 downward. For example, the first cover portion 410 may extend long from a left end of the third cover portion 430 downward. The first cover portion 410 may be configured to surround a wide surface of the battery cell 100 accommodated therein. Furthermore, the first cover portion 410 may be formed in a flat surface shape. In this case, the first cover portion 410 may be formed by being bent from the third cover portion 430.

The second cover portion 420 may be horizontally spaced apart from the first cover portion 410. The second cover portion 420 may extend from the other end of the third cover portion 430 downward. For example, the second cover portion 420 may extend long from a right end of the third cover portion 430 downward. The second cover portion 420 may be configured to surround a wide surface of the battery cell 100 accommodated therein. Furthermore, the second cover portion 420 may be formed in a flat surface shape, like the first cover portion 410. In this case, the second cover portion 420 may be formed by being bent from the third cover portion 430.

In particular, this configuration may be more effective when cooling is mainly performed in a lower portion of the pack case 200 as in the present embodiment. For example, because a battery pack mounted on an electric vehicle is mounted in a lower portion of a vehicle body, cooling may be mainly performed in a lower portion of the pack case 200. In this case, as in the above embodiment, when the lower edge portion E2 of each battery cell 100 is exposed and is in face-to-face contact with the pack case 200, heat may be rapidly transferred from each battery cell 100 to the pack case 200, thereby further improving cooling performance.

Also, according to the embodiment, when high-temperature gas or flame is discharged from the battery cell 100 in a situation such as thermal runaway, the discharged gas or flame may be effectively prevented from traveling upward. In particular, when a passenger is located on an upper side of the battery pack 20 such as in an electric vehicle, according to the embodiment, gas or flame may be suppressed or delayed from traveling toward the passenger.

Preferably, the cell cover 400 may be integrally formed. In this case, the cell cover 400 may be formed by bending a metal plate having a plate structure. That is, the cell cover 400 may be formed by bending one plate. The cell cover 400 may be formed by bending both ends of one plate member in the same direction to surround one or more battery cells 100. In particular, when one cell cover 400 includes the first cover portion 410, the second cover portion 420, and the third cover portion 430, the first cover portion 410, the second cover portion 420, and the third cover portion 430 may be formed of one plate. In this case, the cell cover 400 may be said to include several components that are integrally formed. Each component may be distinguished through a bent portion. In particular, two bent portions may be formed in one plate. Based on the two bent portions, the first cover portion 410, the second cover portion 420, and the third cover portion 430 may be distinguished. In particular, a central portion of one plate may become the third cover portion 430, and both sides may be bent or folded downward around the third cover portion 430 to form the first cover portion 410 and the second cover portion 420. As such, forming a bent portion in one plate to form the cell cover 400 may be performed in various ways such as press or roll forming.

According to this embodiment of the present disclosure, the cell cover 400 may be more simply manufactured. Also, the cell cover 400 having a simplified structure may be formed of a metal material having higher rigidity than the pouch casing 102, to protect at least one battery cell 100 covered by the cell cover 400 from external impact or vibration. In addition, in this case, thermal conduction performance through the cell cover 400 may be further improved, thereby further improving cooling performance.

For example, the cell cover 400 may be formed of a material including stainless steel (SUS) that is easily processed and has high corrosion resistance. The cell cover 400 may be formed of any of various materials other than SUS, to ensure rigidity. In particular, the cell cover 400 may be formed of a metal material. For example, the cell cover 400 may be formed of a chromium (Cr)-based metal material. When the cell cover 400 is formed of a metal material, the cell cover 400 may more stably maintain a state in which the battery cells 100 are stacked and more safely protect the battery cells 100 from external impact. For example, the cell cover 400 may be entirely formed of an SUS material.

Also, as an example, when the cell cover 400 is formed of a steel material such as SUS, an overall structure may be stably maintained when a flame is generated from the battery cell 100 due to a high melting point. In particular, because a steel material has a higher melting point than an aluminum material, the cell cover 400 may not be melted by the flame ejected from the battery cell 100 and a shape of the cell cover 400 may be stably maintained. Accordingly, an effect of preventing or delaying flame propagation between the battery cells 100, a venting control effect, and the like may be excellent.

Accordingly, according to the present disclosure, the battery pack 20 with improved safety, that is, thermal safety, against thermal runaway, fire, and explosion is provided. In the battery pack 20 including the plurality of battery cells 100, when some battery cells are heated, propagation to neighboring battery cells may be stably blocked.

The cell cover 400 may include an insulating coating layer on an inner surface thereof. The insulating coating layer may be obtained by coating, applying, or attaching any one insulating material of silicone resin, polyamide, and rubber. According to the insulating coating layer of the cell cover 400 according to the present embodiment, the insulating coating effect may be maximized with a minimum amount of coating. Also, because the insulating coating layer is applied to the inner surface of the cell cover 400, insulation between the battery cell 100 and the cell cover 400 may be enhanced.

Although three battery cells 100 are covered by one cell cover 400 in FIG. 11, according to the scale of the cell cover 400, the number of battery cells 100 surrounded by the cell cover 400 may be changed in various ways. For example, the number of battery cells 100 may be less than 3, for example, 1, or may be more than 3, for example, 5. A configuration of changing the number of battery cells 100 surrounded by the cell cover 400 may be easily implemented. In particular, according to an embodiment of the present disclosure, the number of unit cells accommodated by the cell cover 400 may be easily changed by changing a width of the cell cover 400 (a width of the third cover portion 430 in the Y-axis direction). Accordingly, in this case, the capacity or output by one cell cover 400 may be easily changed.

The cell cover 400 may further include an insulating member (not shown). The insulating member may be formed of an electrically insulating material and may be provided on an inner surface of the cell cover 400 in which the battery cell 100 is accommodated. In particular, the insulating member may include an adhesive layer on at least one side surface, to be adhered to the inner surface of the cell cover 400. Also, the insulating member may include an adhesive layer on both side surfaces, to be adhered to the inner surface of the cell cover 400 and the battery cell 100. In addition, the insulating member may be formed of a material having heat resistance. For example, the insulating member may be a heat-resistant tape in which an adhesive is applied to a surface of a ceramic sheet having heat resistance. The insulating member may be a film formed of polyimide (PI). Also, the insulating member may be located on an inner surface and an outer surface of the cell cover 400, that is, on both sides.

Also, in the cell unit block 120, a compression pad (not shown) may be further located between the cell cover 400 and the cell cover 400. For example, the compression pad may include an elastic material such as sponge. In addition, the compression pad may include a heat insulating material. The compression pad may be in close contact with the cell covers 400 facing the compression pad in a stacking direction of the plurality of cell covers 400. Accordingly, the compression pad may be configured to suppress swelling that may occur in the cell unit block 120. Accordingly, because the spread of a flame due to thermal runaway of the cell unit block 120 may be delayed and swelling that may occur in the cell unit block 120 may be suppressed, the structural stability of the battery pack 20 may be further ensured.

In the battery pack 20, the partition wall 300 is located between the pack case 200 and the open portion O. Although the partition wall 300 uses a louver method described with reference to FIGS. 4 to 7 in FIG. 9, a structure of the partition wall 300 may be any of various structures as described above.

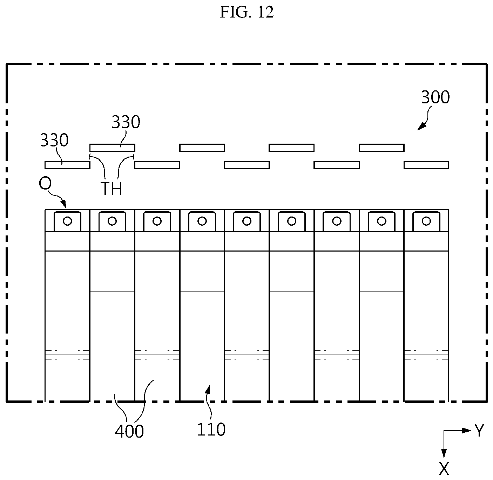

FIG. 12 schematically illustrates the partition wall 300 according to an embodiment which may be included in the battery pack 20. In the present embodiment, the partition wall 300 includes a plurality of blocking portions 330 respectively corresponding to the open portions O of the cell covers 400, and the hole TH formed between the plurality of blocking portions 330 and allowing venting gas or flame discharged from the battery cell 100 to pass therethrough. In this case, the hole TH may be a gap between adjacent blocking portions 330 in the front-back direction. A plurality of holes TH may be formed at certain intervals in the left-right direction.

Venting gas or flame discharged through the open portion O may primarily hit the blocking portion 330. The venting gas or flame discharged from the battery cell 100 in the cell unit 110 may pass between the blocking portions 330 through the hole TH. The venting gas or flame passing through the partition wall 300 through the hole TH may be weakened and introduced into the pack case 200 located ahead of the partition wall 300.

That is, the venting gas or flame may not directly travel toward the pack case 200 between adjacent blocking portions 330, but may flow along a stacking direction of the battery cells 100 through the holes TH and then may flow toward the pack case 200.

According to this embodiment, when thermal runaway occurs in the battery cell 100, the flow of high-temperature and high-pressure venting gas or flame may be primarily weakened through the partition wall 300. Accordingly, the continuous and strong hitting of the high-temperature and high-pressure venting gas or flame on an inner wall of the pack case 200 may be minimized. In addition, even when thermal runaway occurs in the battery cell 100, the structural stability of the battery pack 20 may be ensured. Also, according to the embodiment, propagation of venting gas or flame between adjacent battery cells 100 may be minimized.

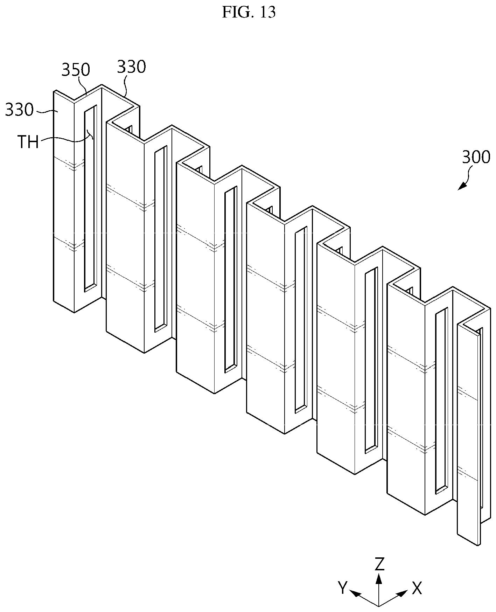

FIG. 13 is a perspective view illustrating still another example of a partition wall.

Referring to FIG. 13, the partition wall 300 is the same as that described with reference to FIG. 12 in that the partition wall 300 includes the plurality of blocking portions 330 respectively corresponding to the open portions O of the cell covers 400, and the hole TH formed between the plurality of blocking portions 330 and allowing venting gas or flame discharged from the battery cell 100 to pass therethrough.

In this case, the plurality of blocking portions 330 are alternately arranged in the left-right direction to be spaced apart from each other in the front-back direction, a connecting portion 350 is formed between the blocking portions 330 along the front-back direction, and the hole TH is a slit formed in the connecting portion 350. The blocking portions 330 may be arranged to alternately face each other. When a flame escapes through the hole TH, in order for the flame to enter the battery cell 100 again, a direction of the flame should be refracted. Accordingly, the partition wall 300 having a structure as shown in FIG. 13 makes it difficult for the flame to return to the battery cell 100.

In the above embodiments, because the cell cover 400 and the partition wall 300 may effectively prevent a dangerous situation such as thermal runaway which may be caused when temperatures of other adjacent battery cells 100 are increased due to venting gas or flame.

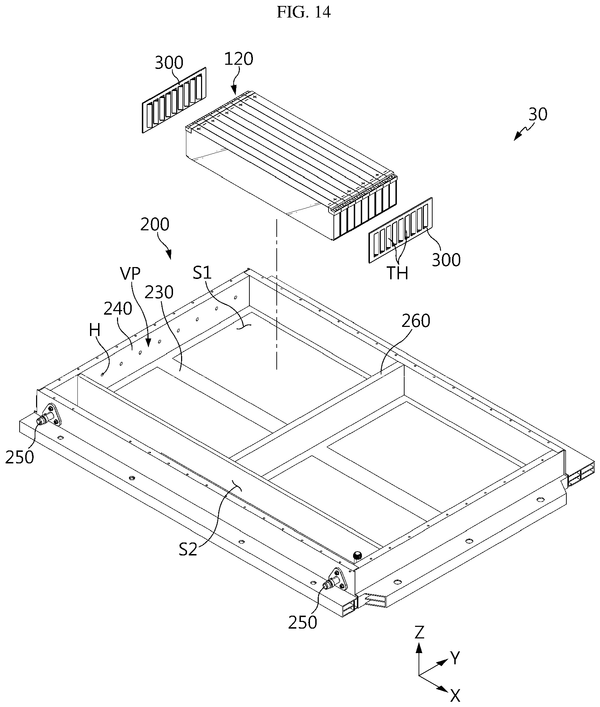

FIG. 14 is a partially exploded perspective view illustrating a battery pack according to still another embodiment of the present disclosure.

In a battery pack 30 of FIG. 14, the pack case 200 has an inner space in which the cell unit 110 is accommodated. The pack case 200 may have a seating structure in which a plurality of cell unit blocks 120 are directly seated without a separate case, and may be configured to accommodate the plurality of cell unit blocks 120 in separate inner spaces. To this end, the pack case 200 may include a lower plate 230 on which the cell unit blocks 120 are seated and a side frame 240 coupled to the lower plate 230 to form an inner space S 1 in which the cell unit blocks 120 are accommodated. The side frame 240 forms a side surface of the pack case 200. Also, the pack case 200 may have a receiving space S2 in which various electrical components required for the battery pack 30 are accommodated.

The side frame 240 may be connected to the lower plate 230, and a pair of side frames 240 connected to ends of the lower plate 230 located in the front-back direction may extend substantially parallel to each other. Also, a pair of side frames 240 connected to ends of the lower plate 230 located in the left-right direction may also extend substantially parallel to each other. The side frames 240 may be connected to each other.

The lower plate 230 and the side frame 240 may be coupled to form a lower case in a box shape with an open upper end and having an inner space in which the plurality of cell units 110 may be accommodated. An upper case (not shown) covering the open upper end of the lower case may be further provided. In this case, the upper case may be formed in a box shape with an open lower end. The upper case may be coupled to the lower case to set the inner space S1 and the receiving space S2. The upper case may be removably connected to the side frame 240 to surround the spaces.

The pack case 200 may include a venting path VP facing the open portion O (see FIG. 11) of the cell cover 400, and the partition wall 300 may be located between the venting path VP and the open portion O. The venting path VP may provide a space through which venting gas or flame discharged from the battery cell 100 may flow in the pack case 200. In this case, the venting path VP may be provided in the side frame 240.

In a general battery pack, an event such as thermal runaway may occur in a specific battery cell. In this case, high-temperature and high-pressure venting gas may be generated from the specific battery cell, and when the high-temperature and high-pressure venting gas meets oxygen, a flame may be generated inside or outside the battery pack. The flame generated in one battery cell may be likely to be transferred to other battery cells adjacent to the one battery cell, and thus, a plurality of battery cells may be simultaneously ignited.

The battery pack 30 of the present disclosure may solve the above problem by providing the open portion O of the cell cover 400 to face the venting path VP of the pack case 200.

The side frame 240 may include an inlet H that communicates with the venting path VP and allows venting gas or flame discharged from the battery cell 100 to be introduced into the venting path VP. Also, a gas valve 250 may be provided on an outer surface of the side frame 240, and the venting path VP may have one end communicating with the inlet H, may extend along the inside of the side frame 240, and may have the other end connected to the gas valve 250. That is, the venting path VP may provide a path through which gas moves in the side frame 240, and gas may be discharged to the outside through the gas valve 250. The battery pack 30 may perform side directional venting, and enable venting toward an outer wall of the battery pack 30.

The inlet H may be usually open, or may be closed without being open in a normal state. For example, a separate door member (not shown) may be provided in the inlet H and the inlet H may be closed in a normal state, but when venting gas is generated from a specific cell unit 110, the inlet H corresponding to the cell unit 110 or the cell unit block 120 including the cell unit 110 may be opened by pressure or heat. For example, the inlet H may be blocked by a member such as a mica sheet. Furthermore, the mica sheet may be formed so that a specific portion is previously cut or notched, and may be configured to be opened by pressure.

According to this embodiment of the present disclosure, venting gas or flame flowing through the venting path VP may be more effectively prevented from being introduced into other cell unit blocks 120 through the inlet H.

When the cell cover 400 is configured with the front and back open as described above, side directional venting along the longitudinal direction of the battery cell 100 may be easily performed. Gas discharged along the longitudinal direction of the battery cell 100 may move along the venting path VP in the side frame 240 through the inlet H provided in an inner surface of the side frame 240 of the pack case 200 and may be discharged through the gas valve 250.

According to the embodiment of the present disclosure, the venting path VP connected to the inlet H of the side frame 240 and the gas valve 250 may be individually provided for each cell unit block 120. That is, gas discharged from a first cell unit block (e.g., a cell unit block located at a front-left position in FIG. 14) may be discharged through a first venting path connected to a first inlet and a first gas valve, and gas discharged from a second cell unit block (e.g., a cell unit block located at a front-right position in FIG. 14) may be discharged through a second venting path connected to a second inlet and a second gas valve separately provided from the first inlet and the first gas valve. According to this configuration, the influence of venting gas from one cell unit block on other cell unit blocks may be minimized.

According to this embodiment of the present disclosure, propagation of thermal runaway or flame between the battery cells 100 in one cell unit block 120 may be prevented. Also, because the flow of venting gas and/or flame is guided in a certain direction, thermal runaway propagation and simultaneous ignition between a plurality of cell unit blocks 120 may be prevented.

The pack case 200 may further include a cross beam 260 that divides the inner space S 1 into a plurality of spaces. One or more cross beams 260 may be included and may be spaced apart from each other or intersect each other to form the plurality of spaces. The cross beam 260 may further increase durability by supplementing the rigidity of the pack case 200.

Even in the battery pack 30, the partition wall 300 is located in front of the open portion O of the cell cover 400 in a direction in which venting gas or flame travels. The venting gas or flame passing through the partition wall 300 through the hole TH may be weakened and introduced into the venting path VP of the pack case 200.

The partition wall 300 guides sparks to be introduced into the venting path VP of the pack case 200. When thermal runaway occurs, even when the partition wall 300 is hit by sparks, structural collapse does not occur and guides sparks to the venting path VP through the hole TH open to a side surface. During thermal runaway, the sparks directly hit the partition wall 300, not an inner wall of the pack case 200. The sparks hitting once the partition wall 300 move to the side surface through the hole TH that is a through-hole structure of the partition wall 300. Because the sparks do not directly hit the pack case 200, structural collapse of the battery pack 30 may be minimized.

In the battery pack 30 of the present disclosure, sparks are guided to the side surface of the partition wall 300, the venting path VP, and the outside of the battery pack 30. Sparks should be sent to the venting path VP, but when the side frame 240 is directly exposed to the sparks, collapse may occur. Accordingly, a structure capable of flowing sparks without collapsing between the battery cell 100 and the venting path VP is required, and this is achieved through the partition wall 300 in the present disclosure.

In case of thermal runaway, the partition wall 300 is primarily hit by sparks, but there is the hole TH through which the sparks may move to the venting path VP, and thus, the sparks are introduced into the venting path VP while the speed of the sparks is reduced. The sparks, which have a reduced speed by primarily hitting the partition wall 300 may not cause the pack case 200 to collapse, and may naturally cool down or be guided and discharged to the outside of the battery pack 30.

The battery pack 10, 20, 30 according to an embodiment of the present disclosure may be applied to various devices. The devices are typically transportation means such as, but not limited to, an electric bicycle, an electric vehicle, and a hybrid vehicle. The battery pack 10, 20, 30 is suitable for use as a battery pack for an electric vehicle. Also, the battery pack 10, 20, 30 may be used as an energy source for an ESS. An ESS refers to a single system that stores power of hundreds of kWH or more. The ESS is the core of the renewable energy industry. Because it is difficult to produce electricity from renewable energy such as solar and wind power at a desired time, it is important to store the electricity and use it when necessary. The battery pack 10, 20, 30 according to an embodiment of the present disclosure may have energy density and capacity suitable for use as an energy source for such an ESS.

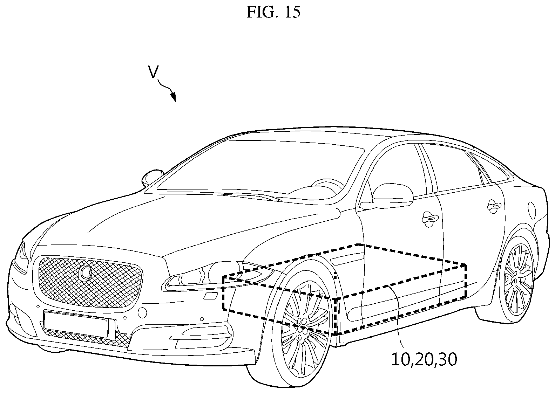

FIG. 15 illustrates a vehicle V according to an embodiment of the present disclosure.

As shown in FIG. 15, the vehicle V according to an embodiment of the present disclosure may include at least one battery pack 10, 20, 30 according to any one of the various embodiments described above.

The vehicle V may include a certain vehicle using electricity as a driving source such as an electric vehicle or a hybrid vehicle. Also, the vehicle V may further include various other elements, for example, a vehicle body or a motor, included in a vehicle, in addition to the battery pack 10, 20, 30 according to an embodiment of the present disclosure.

The battery pack 10, 20, 30 may be provided at a certain position in the vehicle V. The battery pack 10, 20, 30 may be used as an electric energy source for driving the vehicle V by providing a driving force to a motor of the electric vehicle. In this case, the battery pack 10, 20, 30 has a high nominal voltage of 100 V or more.

The battery pack 10, 20, 30 may be charged or discharged by an inverter according to driving of a motor and/or an internal combustion engine. The battery pack 10, 20, 30 may be charged by a regenerative charging device coupled to a brake. The battery pack 10, 20, 30 may be electrically connected to the motor of the vehicle V through the inverter.

As such, the battery pack 10, 20, 30 provided in the vehicle V may provide electric energy required for various operations of the vehicle V. Also, because the battery pack 10, 20, 30 has various effects mentioned above, the vehicle V including the battery pack 10, 20, 30 may also have such effects.

In detail, for example, because the battery pack 20, 30 may include the cell cover 400 and thus may omit a module case, the battery pack 20, 30 may have high energy density. Energy density refers to the amount of energy stored per unit weight. As the energy density of a battery pack increases, energy stored in the battery pack for the same weight increases. Accordingly, in the case of the vehicle V including the battery pack 20, 30, a driving distance on a single charge may be further increased, acceleration may be faster, more luggage may be loaded, and an inner space may be made larger, and thus, the vehicle V may be used in various ways. Also, as the energy density of a battery pack increases, the battery pack becomes lighter for the same energy. When the battery pack 20, 30 becomes lighter and the vehicle V including the battery pack 20, 30 becomes lighter, acceleration may be improved, energy efficiency may be improved, and durability may be improved.

In detail, in another example, because the battery pack 10, 20, 30 includes the partition wall 300, the battery pack 10, 20, 30 may have high safety. Because vehicles are products directly related to human life, safety is something that may never be compromised. There is always a risk of fire in the battery cell 100 due to the physical characteristics of lithium. However, because the battery pack 10, 20, 30 according to the present disclosure includes the partition wall 300, even when a thermal event occurs in the battery cell 100, the thermal event may be prevented from propagating to other portions. Also, because the battery pack 20, 30 according to the present disclosure includes the cell cover 400, thermal stability is further improved. Hence, the vehicle V including the battery pack 10, 20, 30 has fire stability.

The present disclosure has been described with reference to the specific embodiments. However, it will be understood by one of ordinary skill in the art that various modifications may be made within the scope of the present disclosure. Hence, the disclosed embodiments should be considered in descriptive sense only and not for purposes of limitation. That is, the scope of the present disclosure is defined only by the following claims, and all differences within the scope will be construed as being included in the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

### [Explanation of reference signs]

| | | | |
|---|---|---|---|
| 10, 20, 30 : | battery pack | 100 : | battery cell |
| 104 : | electrode lead | 110 : | cell unit |
| 120 : | cell unit block | 200 : | pack case |
| 240 : | side frame | 250 : | gas valve |
| VP : | venting path | 300 : | partition wall |
| TH : | through-hole | 305 : | plate portion |
| 310 : | opening | 315 : | inclined surface |
| 317 : | extension surface | 320 : | louver portion |
| 330 : | blocking portion | 350 : | connecting portion |
| 400 : | cell cover | O : | open portion |
| V : | vehicle | | |

## Claims

1. A battery pack comprising:
at least one battery cell comprising electrode leads drawing out along a front-back direction and stacked along a left-right direction;
a pack case in which the at least one battery cell is accommodated; and
a partition wall extending along the left-right direction between the pack case and the at least one battery cell, the partition wall being closed in the front-back direction and being open in the left-right direction.

2. The battery pack according to claim 1, wherein the partition wall comprises:
a plate portion having a quadrangular cross-sectional shape;
a plurality of rectangular openings passing through both surfaces of the plate portion and spaced apart from each other by a certain interval to be parallel to each other; and
a louver portion extending from one side surface of each of the plurality of rectangular openings to have an inclined surface.

3. The battery pack according to claim 2, wherein the one side surface of the opening is a surface along a vertical direction.

4. The battery pack according to claim 3, wherein the inclined surface comprises a portion facing a direction between the front-back direction and the left-right direction, the inclined surface protruding beyond the plate portion.

5. The battery pack according to claim 4, wherein the louver portion further comprises an extension surface extending from the inclined surface along the left-right direction.

6. The battery pack according to claim 1, wherein the partition wall comprises a plurality of strips having a certain width, bent in a periodic wave shape, alternately arranged parallel to each other, and coupled to each other to form a flat surface.

7. The battery pack according to claim 1, wherein the partition wall comprises a material having a higher melting point than the pack case.

8. The battery pack according to claim 1, further comprising a cell cover configured to surround at least a part of the at least one battery cell and comprising an open portion in the front-back direction,
wherein the partition wall is located between the pack case and the open portion.

9. The battery pack according to claim 8, wherein the partition wall comprises a plurality of blocking portions each corresponding to the open portion of the cell cover and a through-hole formed between the plurality of blocking portions and allowing venting gas or flame discharged from the at least one battery cell to pass therethrough.

10. The battery pack according to claim 9, wherein the through-hole is a gap between adjacent blocking portions in the front-back direction.

11. The battery pack according to claim 9, wherein a plurality of through-holes are formed at certain intervals in the left-right direction.

12. The battery pack according to claim 9, wherein the plurality of blocking portions are alternately arranged in the left-right direction to be spaced apart from each other in the front-back direction, a connecting portion is formed between the plurality of blocking portions along the front-back direction, and the through-hole is a slit formed in the connecting portion.

13. The battery pack according to claim 9, wherein the cell cover comprises:
a first cover portion covering one side surface of the at least one battery cell;
a second cover portion covering the other side surface of the at least one battery cell; and
a third cover portion connecting the first cover portion to the second cover portion and covering an upper end portion of the at least one battery cell.

14. The battery pack according to claim 9, wherein the cell cover is formed by bending one plate.

15. The battery pack according to claim 9, wherein the cell cover comprises an insulating coating layer on an inner surface thereof.

16. The battery pack according to claim 9, wherein the pack case comprises a venting path facing the open portion, and the partition wall is located between the venting path and the open portion.

17. The battery pack according to claim 16, wherein the pack case comprises a side frame constituting a side surface of the pack case, and the venting path is provided in the side frame.

18. The battery pack according to claim 17, wherein the side frame comprises an inlet that communicates with the venting path and allows venting gas or flame discharged from the at least one battery cell to be introduced into the venting path.

19. The battery pack according to claim 18, wherein a gas valve is provided on an outer surface of the side frame, and the venting path comprises one end communicating with the inlet, extends along an inside of the side frame, and comprises the other end connected to the gas valve.

20. A vehicle comprising the battery pack according to any one of claims 1 to 19.
